# EUROPÄISCHE PATENTSCHRIFT

(11) **EP 2 464 495 B1**
(45) Veröffentlichungstag und Bekanntmachung des Hinweises auf die Patenterteilung: **29.06.2016**
(21) Anmeldenummer: 10750036.5
(22) Anmeldetag: 11.08.2010
(51) Int. Cl.: G05B 19/4063

(54) **ANORDNUNG ZUR DIAGNOSE EINER VORRICHTUNG MIT BEWEGLICHEN TEILEN**
ASSEMBLY FOR DIAGNOSING A DEVICE WITH MOVING PARTS
SYSTÈME DE DIAGNOSTIC D'UN DISPOSITIF COMPRENANT DES PARTIES MOBILES

(30) Priorität: 14.08.2009 DE 102009037302
(43) Veröffentlichungstag der Anmeldung: 20.06.2012
(73) Patentinhaber: ABB AG, 68309 Mannheim (DE)
(72) Erfinder: FANTANA, Nicolaie, 69124 Heidelberg (DE); SCHMIDT, Steffen, 35039 Marburg (DE)
(86) Internationale Anmeldenummer: PCT/EP2010/004906
(87) Internationale Veröffentlichungsnummer: WO 2011/018216

(56) Entgegenhaltungen:
- EP-A2- 1 650 540
- US-A1- 2006 033 462
- TAN K K ET AL: "Distributed fault detection in industrial system based on sensor wireless network" COMPUTER STANDARDS AND INTERFACES, ELSEVIER SEQUOIA. LAUSANNE, CH LNKD- DOI:10.1016/J.CSI.2008.03.024, Bd. 31, Nr. 3, 1. März 2009 (2009-03-01), Seiten 573-578, XP025909600 ISSN: 0920-5489 [gefunden am 2008-04-09]

## Beschreibung

Die Erfindung betrifft eine Anordnung, umfassend eine Datenverarbeitungsanlage mit einem Rechner und mindestens eine Vorrichtung mit einer Steuerungseinrichtung, wobei die Vorrichtung bewegliche Teile aufweist, welche an Anbindungsstellen eines feststehenden Grundkörpers oder an weiteren beweglichen Teilen angelenkt sind.

Aus dem Stand der Technik sind bereits eine Vielzahl von Vorrichtungen mit beweglichen Teilen bekannt. Die beweglichen Teile können als Zahnräder, Walzen, Wellen oder Greifarme ausgestaltet sein. Die genannten Vorrichtungen können beispielsweise als Industrieroboter, Förderbänder oder als umfassende Produktionsanlagen ausgestaltet sein. Die genannten Vorrichtungen können des Weiteren Steuerelemente, Antriebselemente oder Kommunikationsmittel umfassen.

Aus der US2006/0033462 A1 ist beispielsweise ein humanoider Roboter bekannt geworden, der über eine Vielzahl an Gelenken und Gliedmaßen verfügt. Die Bewegungen des Roboters werden dabei über eine Steuer-/Regeleinrichtung kontrolliert, wobei auch externe Signale von Sensoren, wie beispielsweise einem Beschleunigungssensor, einem Positursensor, einem Auflagekraftsensor usw. mitverarbeitet werden.

Bekannt sind aber auch noch größere Systeme, die aus mehreren der genannten Vorrichtungen bestehen. Dabei stehen die einzelnen Vorrichtungen zur Realisierung eines oder mehrerer Arbeitsschritte miteinander in Verbindung. Derartige Systeme finden in großen Förderanlagen, komplexen Antrieben oder in Produktionsstraßen Verwendung.

Vor diesem Hintergrund sind sogenannte Indoor-Systeme mit beweglichen Teilen bekannt, die beispielweise als automatische Prozessketten der metallverarbeitenden Industrie, der Autoindustrie, der Nahrungsmittelindustrie, oder der Papierindustrie ausgestaltet sind. Sogenannte Outdoor-Systeme finden beispielsweise in der Bauindustrie oder im Bergbau Verwendung.

Vorrichtungen mit beweglichen Teilen erstrecken sich häufig in viele unterschiedliche Bereiche einer technischen Anlage und zeigen daher eine große räumliche Ausdehnung. Des Weiteren weisen solche Vorrichtungen einen komplexen Aufbau auf und umfassen häufig viele bewegliche Teile. Die Vorrichtungen führen oftmals komplizierte Arbeitsschritte aus, die einander zeitlich abfolgen und/oder koinzidieren.

Zur Sicherstellung eines fehlerfreien und zuverlässigen Betriebs der Vorrichtungen müssen diese oft an unterschiedlichen Stellen zeitgleich überwacht und überprüft werden. Die bekannten Vorrichtungen weisen bereits meist einen oder mehrere vorrichtungsinterne Speicher auf, in welchen Daten oder Signale abgelegt werden.

Zur zuverlässigen Überprüfung bzw. Diagnose solch komplexer Vorrichtungen müssen allerdings neben den bereits gespeicherten Daten und Signalen noch weitere Daten der Vorrichtungen erfasst werden. Hierzu müssen die Vorrichtungen derzeit mit aufwendigen Messaufbauten nachgerüstet werden.

Der Erfindung liegt daher die Aufgabe zugrunde, eine Anordnung der eingangs genannten Art derart auszugestalten und weiterzubilden, dass eine zuverlässige Diagnose des Zustands und/ oder der Betriebsparameter der Vorrichtung kostengünstig durchführbar ist.

Erfindungsgemäß wird die voranstehende Aufgabe durch eine Anordnung mit den Merkmalen des Patentanspruchs 1 gelöst.

Danach ist die eingangs genannte Anordnung durch mindestens eine Sensoreinrichtung gekennzeichnet, welche drahtlos an einer Anbindungsstelle oder an einem beweglichen Teil selbst festgelegt ist.

Erfindungsgemäß ist zunächst erkannt worden, dass gerade Vorrichtungen mit beweglichen Teilen an ganz bestimmten, kritischen Anbindungsstellen kontrolliert werden müssen, um deren einwandfreien Betrieb sicherzustellen. Dann ist erkannt worden, dass ein Serviceingenieur oder Servicetechniker passive oder aktive drahtlos datenübertragende Sensoreinrichtungen problemlos an bestimmten, erfahrungsgemäß kritischen Anbindungsstellen positionieren kann, ohne eine aufwendige Verdrahtung in einem komplexen System von Vorrichtungen vorzunehmen. Der normale Arbeitsbetrieb einer Vorrichtung oder eines Systems von Vorrichtungen wird durch die Erfassung der Daten für eine Diagnose nicht gestört. Weiter ist erkannt worden, dass drahtlos datenübertragende Sensoreinrichtungen sowohl untereinander im Sinne eines Sensornetzwerks als auch mit weiteren Netzwerkteilnehmern kommunizieren können, beispielsweise mittels Funk und/oder Infrarot und/oder akustisch und/oder per ultrasound. Schließlich ist erkannt worden, dass durch die Sensoreinrichtungen problemlos Testbewegungssequenzen gefahren werden können, welche eine zuverlässige und problemlose Diagnose des Zustands und der Betriebsparameter der Vorrichtung zulassen.

Folglich ist die eingangs genannte Aufgabe gelöst.

In einer Ausgestaltung erfasst die Sensoreinrichtung vorzugsweise physikalische Daten der beweglichen Teile und übermittelt diese drahtlos. Hierzu sind ein oder mehrere Sensoreinrichtungen an Anbindungsstellen oder beweglichen Teilen einer Vorrichtung, insbesondere an einem Industrieroboter, angebracht. Die Sensoreinrichtung erfasst beispielsweise Beschleunigungen, Temperaturen, Licht, Drehmomente und/oder Geräusche , chemische Substanzen in der Umgebung, auch Spannungen, Ströme, insbesondere Motorströme, und Drehmomente beispielsweise über Wandler und übermittelt diese Daten. Akustische Signale bzw. Daten können Aufschluss über mechanische Gegebenheiten geben. Spitzen im Geräuschpegel können beispielsweise eine Berührung von Zahnflanken eines Getriebes wiedergeben und auf ein Getriebespiel hinweisen. Des Weiteren können Geräuschpegeländerungen auf Lagerdefekte hinweisen.

In einer vorteilhaften Ausgestaltung ist die Sensoreinrichtung an einer markierten, für eine Sensoreinrichtung vorgesehenen Position angeordnet. Zur Realisierung einer einwandfreien örtlichen Zuordenbarkeit der Sensoreinrichtungen sind diese vorzugsweise an Anbindungsstellen oder beweglichen Teilen angeordnet, die vom Hersteller der Vorrichtung werkseitig markiert sind. Denkbar ist aber auch, die Positionen der verwendeten Sensoreinrichtungen rechnerisch anhand bekannter Referenzkoordinaten zu ermitteln. Desgleichen ist weiterhin vorsehbar, dass die Anbindungstellen mit einem RFID (Radio Frequency Identification) -Tag oder -Transponder versehen werden.

Weiter vorteilhaft erfasst die Sensoreinrichtung die Daten mit einer voreingestellten Abfragerate. Hierdurch ist eine dauerhafte Überwachung der zu diagnostizierenden Teile gewährleistet. Nur gelegentlich oder punktuell auftretende Störungen und Fehler können so zuverlässig erfasst werden. Die Daten werden vorzugsweise während einer voreingestellten Zeitdauer erfasst und auf der Sensoreinrichtung lokal gespeichert. Während dieser Zeitdauer ist eine Funkverbindung der Sensoreinrichtung nicht aktiv. Hierdurch ist eine höhere Abfragerate erzielbar. Die Erfassung der Daten kann zeitgesteuert, ereignisgesteuert oder prozessgesteuert erfolgen. Bei einer Prozesssteuerung wird die Erfassung der Daten von einer Steuerungseinrichtung der Vorrichtung gestartet.

In einer weiteren Ausgestaltung weist die Datenverarbeitungsanlage eine Brückeneinheit auf, an die mindestens eine Sensoreinrichtung erfasste Daten mittels einer Funkeinrichtung übermittelt. Die Brückeneinheit kann als isoliertes Bauteil über eine Schnittstelle an einen Rechner angesteckt werden oder die Steuerungseinrichtung der Vorrichtung erweitern. Die Brückeneinheit überträgt vorteilhaft über Schnittstellen die übermittelten Daten an einen ortsfesten oder einen mobilen Rechner. Vorteilhaft überträgt die Brückeneinheit die Daten kontinuierlich an einen Rechner. Dort werden die Daten in einer lokalen Datenbank oder in einem lokalen Speicher gespeichert. Denkbar ist auch, dass die Brückeneinheit als PCI oder internes Modul ausgestaltet ist. Die Brückeneinheit bildet vorzugsweise mit mehreren Sensoreinrichtungen ein Sensornetzwerk, welches Single-Hop- oder Multi-Hop-Verbindungen umfasst. Hierdurch können große Strecken zwischen den einzelnen Sensoreinrichtungen und der Brückeneinheit überbrückt werden.

In einer vorteilhaften Ausgestaltung ist die Brückeneinheit an der Steuerungseinrichtung der Vorrichtung angebracht oder in diese integriert. Die Brückeneinheit ist vorzugsweise in der Steuerungseinrichtung eingebaut und an die Stromversorgung der Steuerungseinrichtung angeschlossen. Die Brückeneinheit ist optional ein- und ausschaltbar. Bei dieser konkreten Ausgestaltung ist die Steuerungseinrichtung um die Brückeneinheit erweitert. Die Erweiterung erlaubt, die Daten der Sensoreinrichtung und der Steuerungseinrichtung in einem vorrichtungsinternen Speicher zu speichern. So können die Daten der Vorrichtung mit den Daten der Sensoreinrichtung zeitlich und funktionell assoziiert werden. Hierzu ist vorteilhaft eine vorrichtungsinterne Software und eine Hardware vorgesehen, um in der Steuerungseinrichtung Daten der Sensoreinrichtung zu sammeln und zu speichern. Die Hardware und Software suchen vorzugsweise in einem kontinuierlichen oder periodischen Scan-Modus nach Sensoreinrichtungen, die in Reichweite sind. Sobald eine Verbindung zu den aufgefundenen Sensoreinrichtungen aufgenommen ist, werden die aufgefundenen Sensoreinrichtungen auf einem Display der Steuerungseinrichtung, beispielsweise in einem Pop-Up-Fenster, angezeigt oder durch Blinken signalisiert. Des Weiteren ist möglich, eine Konfiguration der Sensoreinrichtungen mit vorgegebenen Einstellungen per Funk, automatisch oder durch einen mobilen Rechner durchzuführen. Diese Konfiguration soll die Sensoreinrichtungen im Hinblick auf die zu diagnostizierenden Daten der Vorrichtung einstellen. Interne und für die jeweilige Vorrichtung typische Konfigurationsdaten sind vorteilhaft im vorrichtungsinternen Speicher abgelegt.

Eine weitere Ausgestaltung sieht vor, dass die Brückeneinheit an dem Rechner angebracht oder in diesen integriert ist. Dabei ist die Brückeneinheit vorzugsweise fest mit dem Rechner verbunden. Hierdurch ist die Brückeneinheit gemeinsam mit dem Rechner in die Nähe einer Vorrichtung verbringbar, um von den Sensoreinrichtungen oder der Steuerungseinrichtung Daten per Funk zu empfangen.

In einer vorteilhaften Ausgestaltung liest der Rechner von einer Sensoreinrichtung erfasste Daten aus und/ oder konfiguriert die Sensoreinrichtung. Dies kann durch Funkkontakt oder über eine Schnittstelle mit der Brückeneinheit erfolgen. Der Rechner kann dann die erfassten Daten analysieren.

In einer weiteren Ausgestaltung liest der Rechner Daten aus einer Steuerungseinrichtung der Vorrichtung aus und/ oder konfiguriert die Steuerungseinrichtung. Vorteilhaft sind alle wesentlichen Daten in einem vorrichtungsinternen Speicher zwischengespeichert und können daher nach Bedarf mit dem Rechner ausgelesen werden. Hierzu kann eine temporäre Verbindung zwischen dem Rechner und der Steuerungseinrichtung hergestellt werden, die kabelgebunden oder als Funkverbindung ausgestaltet ist.

Vor diesem Hintergrund ist auf dem Rechner eine Software installiert. Die Software erfasst vorzugsweise Daten der Sensoreinrichtung bzw. eines Sensornetzwerks und der Daten einer Steuerungseinrichtung der Vorrichtung. Die Software erlaubt eine Konfigurierung der Sensoreinrichtungen und/ oder einer Steuerungseinrichtung einer Vorrichtung. Die Software erlaubt, die Vorrichtung und/ oder die Sensoreinrichtungen derart zu konfigurieren, dass beispielsweise zeitliche Daten erfasst werden oder Daten in Abhängigkeit von eintretenden Ereignissen erfasst werden. Des Weiteren stellt die Software verschiedene Arbeitsmodi zur Verfügung, wie beispielsweise kontinuierliche Erfassung von Daten, befehlsgesteuerte oder ereignisgesteuerte Erfassung von Daten der Sensoreinrichtungen und/ oder der Steuerungseinrichtung. Die Software erlaubt überdies eine Steuerung der Vorrichtung bzw. mehrerer Vorrichtungen derart, dass deren bewegliche Teile verschiedene Bewegungsabläufe ausführen. Dieser Arbeitsmodus ist insbesondere bei der Durchführung von Testbewegungssequenzen hilfreich. Insbesondere wird eine solche Testbewegungssequenz bei einem Industrieroboter durchgeführt.

In einer weiteren Ausgestaltung enthält der Rechner eine Software, welche die von der Sensoreinrichtung empfangenen Daten und/ oder Daten aus der Steuerungseinrichtung analysiert und Diagnoseergebnisse ausgibt. Die Software erlaubt vorzugsweise eine Visualisierung und visuelle Analyse der Daten. Des Weiteren erlaubt die Software eine Analyse der Daten und Verarbeitung gemessener Signale. Hierdurch ist eine rasche Analyse und Diagnose des Zustands der Vorrichtung bzw. deren beweglicher Teile möglich.

In einer weiteren Ausgestaltung liest der Rechner erfasste Daten von mehreren Sensoreinrichtungen verschiedener Vorrichtungen und/ oder Daten mehrerer Steuerungseinrichtungen verschiedener Vorrichtungen aus. Hierdurch können mit einem Rechner eine Vielzahl von Vorrichtungen überwacht und einer Diagnose unterzogen werden.

Eine weitere Ausgestaltung sieht vor, dass der Rechner mehrere Sensoreinrichtungen verschiedener Vorrichtungen konfiguriert und/ oder mehrere Steuerungseinrichtungen verschiedener Vorrichtungen konfiguriert. Hierdurch können mit einem Rechner eine Vielzahl von Vorrichtungen angesteuert, überwacht und einer Diagnose unterzogen werden.

In einer vorteilhaften Ausgestaltung ist der Rechner als mobiler Rechner ausgestaltet. Ein mobiler Rechner zum Auslesen und Versenden von Daten und Steuerungsbefehlen kann von einem Servicetechniker problemlos getragen und vor Ort zur Diagnose verwendet werden. Ein solcher Rechner kann mit einer oder mehreren Steuerungseinrichtungen oder mit mehreren Sensoreinrichtungen kommunizieren.

In einer weiteren Ausgestaltung weist die Datenverarbeitungsanlage einen zentralen, externen Speicher auf, an welchen der Rechner die von einer Sensoreinrichtung erfassten Daten und/ oder Daten der Steuerungseinrichtung über das Internet überträgt. Hierdurch können in weit verzweigten Produktionsanlagen oder in Outdoor-Systemen erfasste Daten an einen sehr weit entfernten Ort übertragen und dort ausgewertet werden. Der zentrale, externe Speicher stellt eine dauerhafte und sichere Speicherung der Daten sicher.

Eine weitere Ausgestaltung sieht vor, dass die Übertragung der Daten der Steuerungseinrichtung und/ oder der Sensoreinrichtung durch eine Funkwiederholeinrichtung erfolgt. Hierdurch ist sicher gestellt, dass die Daten auch bei einer Störung oder Unterbrechung der Funkverbindung sämtlich auf einen Rechner übertragen werden. Die Funkwiederholeinrichtung ist insbesondere bei der Überbrückung großer Strecken zwischen Rechner und Vorrichtung sinnvoll.

In einer vorteilhaften Ausgestaltung weist die Sensoreinrichtung ein Gehäuse auf, in und/ oder an welchem ein oder mehrere Sensoren aufgenommen sind. Das Gehäuse schützt empfindliche Sensoren und deren Verdrahtung mit Sensorplatinen, Prozessplatinen, Datenspeichern und Funkeinrichtungen vor Umwelteinflüssen. Die Sensoreinrichtung mit einem oder mehreren Sensoren kann durch das Gehäuse problemlos an einer Anbindungsstelle der zu diagnostizierenden Vorrichtung festgelegt werden. Hierbei ist denkbar, dass Sensoren zur Erfassung von Strömen, Geschwindigkeiten, Temperaturen, Geräuschen einzeln oder in Kombination im oder am Gehäuse aufgenommen sind.

Vorteilhaft ist im oder am Gehäuse mindestens ein Akustiksensor zur Erfassung von Geräuschen aufgenommen. Ein Akustiksensor kann Geräusche und Vibrationen der beweglichen Teile bzw. eines Grundkörpers einer Vorrichtung erfassen. Des Weiteren kann ein Akustiksensor Geräusche der Umgebung erfassen.

Vor diesem Hintergrund ist in einer weiteren Ausgestaltung im Gehäuse ein erster Akustiksensor zur Erfassung von Geräuschen des beweglichen Teils und am Gehäuse ein zweiter Akustiksensor zur Erfassung von Umgebungsgeräuschen aufgenommen. Durch diese konkrete Ausgestaltung ist es möglich, von den Geräuschen, die vom ersten Akustiksensor erfasst wurden, die vom zweiten Akustiksensor erfassten Geräusche zu subtrahieren. Hierdurch können sehr exakt die von den beweglichen Teilen erzeugten Geräusche und Vibrationen isoliert und analysiert werden.

In einer weiteren Ausgestaltung ist im Gehäuse mindestens eine Prozessplatine aufgenommen. Die Prozessplatine verarbeitet Rohdaten und speichert diese als zu übermittelnde Daten auf einem Datenspeicher. Des Weiteren steuert die Prozessplatine die Funkübertragung der Daten.

Eine weitere Ausgestaltung sieht vor, dass die Sensoreinrichtung einen eigenen Datenspeicher aufweist. Hierdurch ist die Sensoreinrichtung von externen Speichern unabhängig und kann autark Daten erfassen und speichern.

In einer weiteren Ausgestaltung weist die Sensoreinrichtung eine eigene Stromversorgung auf. Durch diese konkrete Ausgestaltung ist sichergestellt, dass die Stromversorgung der Vorrichtung oder eventuelle Stromschwankungen in der Stromversorgung der Vorrichtung die Sensoren nicht stören.

Vorteilhaft ist die Sensoreinrichtung magnetisch oder mechanisch an den Anbindungsstellen der Vorrichtung festgelegt. Hierdurch sind einerseits eine rasche Befestigung und andererseits ein problemloses Ablösen der Sensoreinrichtung ermöglicht. Das Gehäuse weist hierzu vorteilhaft einen Permanentmagneten auf.

Die hier beschriebenen Sensoreinrichtungen werden bei Bedarf an oder auf der Vorrichtung angebracht, beispielsweise während eines Service-Einssatzes oder zur Überwachung nach einem Störfall. Hierzu wird die Vorrichtung kurz außer Betrieb gesetzt und die Sensoreinrichtungen werden angebracht und eingeschaltet. Die Sammlung von Daten erfolgt nun mit Standardeinstellungen, die drahtlos auf die Sensoreinrichtungen übertragen werden. Die Zeitdauer für das Messen/ Sammeln von Daten kann auch durch eine Standardeinstellung festgelegt sein. Alternativ kann man mit einem mobilen Rechner auch eine neue Konfiguration für die Sensoreinrichtungen festlegen. Die Standardeinstellungen können mit dem mobilen Rechner verändert werden. Nach der Konfiguration der Sensoreinrichtungen wird das Sammeln der Daten gestartet. Alternativ kann in einem automatischen Modus die Sammlung der Daten nach einer automatischen Konfiguration sofort starten. Im letzten Fall ist nur das Anbringen der Sensoreinrichtungen vom Servicetechniker durchzuführen.

Wenn die Brückeneinheit die Steuerungseinrichtung der Vorrichtung erweitert, werden die Daten vorteilhaft in einem vorrichtungsinternen Speicher der Steuerungseinrichtung gesammelt. Die Zeitdauer für das Messen von Daten kann standardmäßig festgelegt sein oder vom Servicetechniker mit dem mobilen Rechner eingestellt werden.

Die Vorrichtung kann in operativem/normalem Modus fahren. Nach einer festgelegten Zeitdauer des Betriebs, nach einem konkreten Arbeitsablauf oder nach einem Ablauf von Testbewegungssequenzen werden die gesammelten Daten mit einem mobilen Rechner des Servicetechnikers eingelesen. Die Daten werden vom Servicetechniker gesammelt, analysiert und bewertet.

Die Sensoreinrichtungen verfügen vorteilhaft über eine eigene Stromversorgung, da sie nur temporär an die Vorrichtung angebracht werden. Das Auslesen von Daten erfolgt vorteilhaft durch einen Servicetechniker, der nach einer festgelegten Messzeit die Daten ausliest. Das Auslesen kann über eine temporäre Verbindung, die kabelgebunden oder als Funksignal ausgestaltet sein kann, erfolgen. Die Daten werden im mobilen Rechner gesammelt, gespeichert, ggf. analysiert und/oder an einen externen Speicher verschickt. Dabei werden sowohl die Daten der Steuerungseinrichtung und der Sensoreinrichtungen ausgelesen.

Die hier beschriebenen Sensoreinrichtungen können auch dauerhaft an gewissen Anbindungsstellen angebracht sein. Die Anbindungsstellen können mit einer permanenten Stromversorgung und einem Raum für die Sensoreinrichtungen versehen sein. Die Sensoreinrichtungen können optional bei der Herstellung, als Nachrüstungsbauteile oder bei Bedarf an die Vorrichtung angebracht werden und dauerhaft oder vorübergehend dort verbleiben.

In Verbindung mit der Erläuterung bevorzugter Ausführungsbeispiele der Erfindung anhand der Zeichnung werden auch im Allgemeinen bevorzugte Ausgestaltungen und Weiterbildungen der Lehre erläutert.

In der Zeichnung zeigen
- Fig. 1: eine schematische Ansicht einer Anordnung, bei der ein mobiler Rechner für die Diagnose einer Vorrichtung verwendet wird,
- Fig. 2: eine schematische Ansicht einer Anordnung, bei der in der Steuerungseinrichtung der Vorrichtung Datenerfassungselemente integriert sind,
- Fig. 3: eine schematische Ansicht einer Anordnung, bei der in der Steuerungseinrichtung der Vorrichtung eine vorrichtungsinterne Diagnoseeinrichtung integriert ist,
- Fig. 4: eine schematische Darstellung einer Anordnung, die eine Vorrichtung mit beweglichen Teilen und eine Datenverarbeitungsanlage aufweist, wobei die Vorrichtung als Industrieroboter ausgestaltet ist und eine Steuerungseinrichtung aufweist, die um die Brückeneinheit erweitert ist,
- Fig. 5: eine schematische Darstellung einer Anordnung, wobei die Brückeneinheit dem Rechner einer Datenverarbeitungsanlage zugeordnet ist,
- Fig. 6: eine schematische Darstellung einer Anordnung, die mehrere Industrieroboter umfasst, wobei deren Daten von einem mobilen Rechner erfasst werden, dem die Brückeneinheit zugeordnet ist,
- Fig. 7: eine schematische Darstellung der von einem Sensor erfassten und übermittelten Daten,
- Fig. 8: eine schematische Darstellung einer Sensoreinrichtung mit einem Gehäuse,
- Fig. 9: eine schematische Darstellung einer Sensoreinrichtung mit einem Gehäuse, wobei ein Akustiksensor an einem Körperschallübertragungskörper angeordnet ist,
- Fig. 10: eine schematische Darstellung einer Sensoreinrichtung mit einem Gehäuse, in welchem eine Prozessplatine und eine Sensorplatine längsfluchtend angeordnet sind,
- Fig. 11: eine schematische Darstellung einer Sensoreinrichtung mit einem Gehäuse, in welcher eine Sensorplatine und eine Prozessplatine einstückig ausgebildet sind,
- Fig. 12: eine schematische Darstellung einer Sensoreinrichtung mit einem Gehäuse, an welchem außerhalb ein Akustiksensor zur Erfassung von Umgebungsgeräuschen angeordnet ist,
- Fig. 13: eine schematische Darstellung einer Sensoreinrichtung mit einem Gehäuse, an welchem außerhalb ein Akustiksensor zur Erfassung von Umgebungsgeräuschen angeordnet ist, wobei eine Prozessplatine und eine Sensorplatine längsfluchtend angeordnet sind,
- Fig. 14: eine schematische Darstellung einer Sensoreinrichtung mit einem Gehäuse, an welchem außerhalb ein Akustiksensor zur Erfassung von Umgebungsgeräuschen angeordnet ist, wobei eine Sensorplatine und eine Prozessplatine einstückig ausgebildet sind, und
- Fig. 15: eine schematische Darstellung einer Sensoreinrichtung mit einem Gehäuse, an welchem außerhalb ein zweiter Akustiksensor zur Erfassung von Umgebungsgeräuschen angeordnet ist, wobei ein erster Akustiksensor außerhalb des Gehäuses in einer Kammer aufgenommen ist.

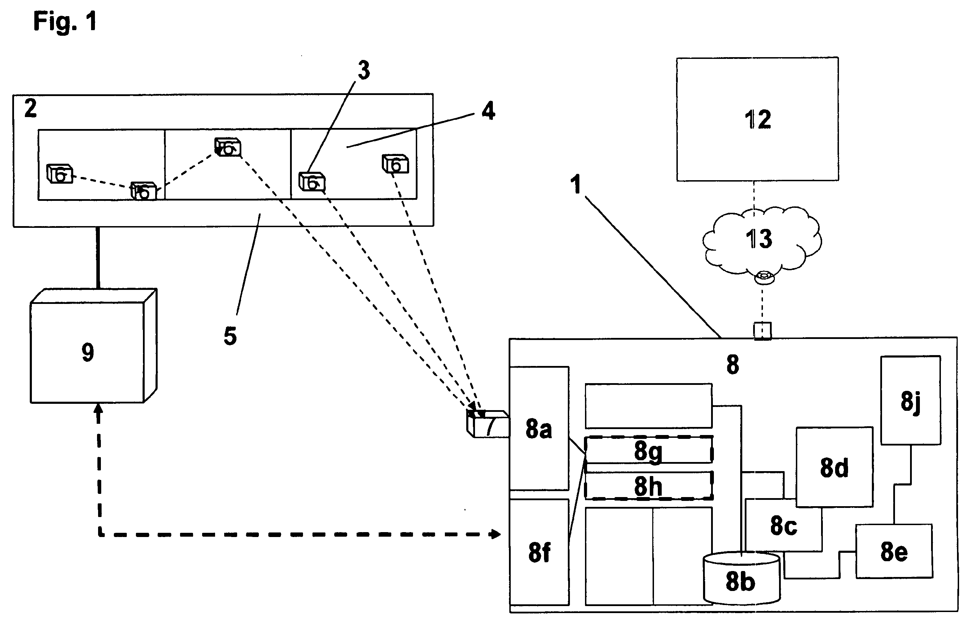

Fig. 1 zeigt eine Anordnung, umfassend eine Datenverarbeitungsanlage 1 und mindestens eine Vorrichtung 2, welche bewegliche Teile 3 aufweist, wobei die beweglichen Teile 3 an Anbindungsstellen 4 eines feststehenden Grundkörpers 5 oder an weiteren beweglichen Teilen 3 angelenkt sind. Mehrere drahtlos datenübertragende Sensoreinrichtungen 6 sind an Anbindungsstellen 4 oder an beweglichen Teilen 3 selbst festgelegt und kommunizieren mit der Datenverarbeitungsanlage 1.

Mehrere Sensoreinrichtungen 6 sind an den beweglichen Teilen 3 festgelegt und erfassen physikalische Daten der beweglichen Teile 3. Die Sensoreinrichtungen 6 sind an markierten, für die Sensoreinrichtungen 6 vorgesehenen Positionen angeordnet. Die Sensoreinrichtungen 6 erfassen Daten mit einer voreingestellten Abfragerate. Die Datenverarbeitungsanlage 1 weist eine Brückeneinheit 7 auf, an welche die Sensoreinrichtungen 6 erfasste Daten übermitteln. Die Übermittlung der Daten erfolgt per Funk.

### Die Anordnung gemäß Fig. 1 wird in folgender Weise eingesetzt:

Ein Servicetechniker befestigt die Sensoreinrichtungen 6 an den vorgesehenen Markierungen der Vorrichtung 2 und stellt die Verbindung der Sensoreinrichtungen 6 zu einem mobilen Rechner 8 her. Ein drahtloses Sensornetzwerk, welches Single-Hop- oder Multi-Hop-Verbindungen aufweist, wird aufgebaut. Der mobile Rechner 8 wird des Weiteren mit einer Steuerungseinrichtung 9 der Vorrichtung 2 verbunden, um die Steuerungseinrichtungszeit und weitere Daten zu erfassen. Dann wird eine Zeitsynchronisation zwischen dem Rechner 8 und der Steuerungseinrichtung 9 durchgeführt. Eine Testbewegungssequenz wird vorbereitet und gespeichert, wobei eingestellt wird, welche Daten aus der Steuerungseinrichtung 9 eingelesen werden sollen.

Darauf wird die Steuerungseinrichtung 9 konfiguriert. Ein Startsignal wird an die Steuerungseinrichtung 9 und an die Sensoreinrichtungen 6 gesandt. Die Daten der Sensoreinrichtungen 6 und der Steuerungseinrichtung 9 werden durch einen Datenerfassungsblock 8a erfasst und in einem Datenspeicher 8b gespeichert. Die Daten werden dem Servicetechniker präsentiert, wobei eine Diagnoseeinrichtung 8c zur Auswertung verwendet wird. Die Daten werden analysiert, indem in einem Vergleichsmodul 8d erfasste Zeitintervalle mit Modelldaten verglichen werden. Ein Berichtsmodul 8e erstellt dann einen Bericht und sendet die Daten durch ein Versendungsmodul 8j per Email über das Internet 13 an einen zentralen, externen Speicher 12.

Zwischen der Steuerungseinrichtung 9 und dem Rechner 8 besteht eine temporäre Verbindung, die kabelgebunden oder kabellos sein kann. Sie kann an einer Schnittstelle 8f durch WLAN, Bluetooth oder Ethernet hergestellt werden. Sie dient der Steuerung der Bewegungssequenzen der Vorrichtung 2 und dem gleichzeitigen Auslesen der Daten aus der Steuerungseinrichtung 9. Es können Ströme, Spannungen, Positionen, Kräfte und ähnliche Daten erfasst werden. Die Bewegungssequenz wird durch einen Trigger 8g gestartet. Die Steuerungseinrichtungszeit und Sensoreinrichtungszeiten werden durch ein Synchronisierungsmodul 8h synchronisiert.

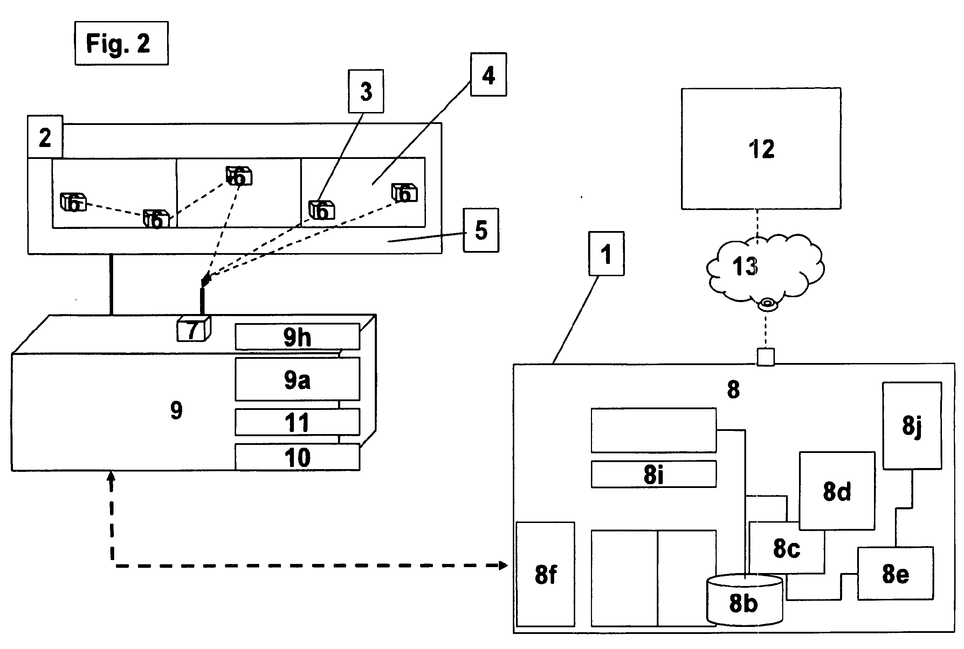

Fig. 2 zeigt eine in der Steuerungseinrichtung 9 integrierte Brückeneinheit 7, einen vorrichtungsinternen Datenerfassungsblock 9a, ein vorrichtungsinternes Synchronisierungsmodul 9h, einen integrierten vorrichtungsinternen Speicher 10 und eine vorrichtungsinterne Software 11. Die vorrichtungsinterne Software 11 empfängt Konfigurations- und Messbefehle und setzt diese an der Vorrichtung 2 um.

Zwischen der Steuerungseinrichtung 9 und dem Rechner 8 besteht hierzu eine temporäre Verbindung, die kabelgebunden oder kabellos sein kann. Sie kann an einer Schnittstelle 8f durch WLAN, Bluetooth oder Ethernet hergestellt werden. Die Verbindung dient der Konfigurierung der Vorrichtung 2, insbesondere der Einstellung der zu erfassenden Daten. Es wird des Weiteren konfiguriert, in welcher Weise erfasst und gemessen werden soll. Die Erfassung der Daten kann zeitgebunden oder ereignisgebunden gestartet werden. Die Verbindung dient auch der Übermittlung der im vorrichtungsinternen Datenerfassungsblock 9a erfassten Daten. Der vorrichtungsinterne Datenerfassungsblock 9a ist in der Steuerungseinrichtung 9 integriert. Der mobile Rechner 8 dient dem Konfigurieren, dem Auslesen der erfassten Daten und deren Analyse. Die Daten können wie in Fig. 1 beschrieben mobil analysiert und an einen externen Speicher 12 über das Internet 13 versandt werden.

### Die Anordnung gemäß Fig. 2 wird wie folgt verwendet:

Die drahtlosen Sensoreinrichtungen 6 sind entweder dauerhaft an der Vorrichtung 2 angeordnet oder können die Vorrichtung 2 als Nachrüstelemente ergänzen. Bei einer dauerhaften Befestigung der Sensoreinrichtungen 6 weist die Vorrichtung 2 vorzugsweise ein kostengünstiges Monitorsystem auf. Das Sensornetzwerk der Sensoreinrichtungen 6 kann Single-Hop- oder Multi-Hop-Verbindungen aufweisen. Die vorrichtungsinternen Datenerfassungselemente sind dauerhaft vorgesehen oder können nachgerüstet werden. Diese sind an der Steuerungseinrichtung 9 angeordnet.

Der Servicetechniker verwendet einen mobilen Rechner 8, um Konfigurierungen und Datenerfassungsbefehle auf die Steuerungseinrichtung 9 zu übertragen. Des Weiteren kann eingestellt werden, ob die Datenerfassung zeitgebunden oder ereignisgebunden erfolgt. Vor der Datenerfassung erfolgt eine Zeitsynchronisierung, es werden Befehle zur Datenspeicherung, Datenerfassungsdauer und ähnliches mehr eingestellt. Dabei ist denkbar, eine spezielle Testbewegungssequenz oder eine Überwachung des Arbeitsbetriebs durchzuführen.

Die Daten werden in dem vorrichtungsinternen Speicher 10 zur späteren Verwendung auf dem mobilen Rechner 8 gespeichert. Der Servicetechniker kann durch ein Nachrichtsmodul 8i informiert werden, wann die erfassten Daten aus der Steuerungseinrichtung 9 ausgelesen werden können. Denkbar ist auch, dass der Servicetechniker den Platz, an dem der mobile Rechner 8 aufgestellt ist, verlässt und die Datenerfassung automatisch erfolgt. Die erfassten Daten werden dann vom zurückkehrenden Servicetechniker ausgelesen und auf den mobilen Rechner 8 übertragen. Die Daten werden dem Servicetechniker präsentiert. Dabei wird eine Diagnoseinrichtung 8c zur Analyse der Daten verwendet. Zur Analyse der Daten werden Zeitintervalle und Zeitdifferenzen berechnet und mit typischen Modelldaten verglichen. Das Berichtsmodul 8e bereitet Berichte vor und kann diese durch ein Versendungsmodul 8j über das Internet 13 an einen zentralen, externen Speicher 12 versenden.

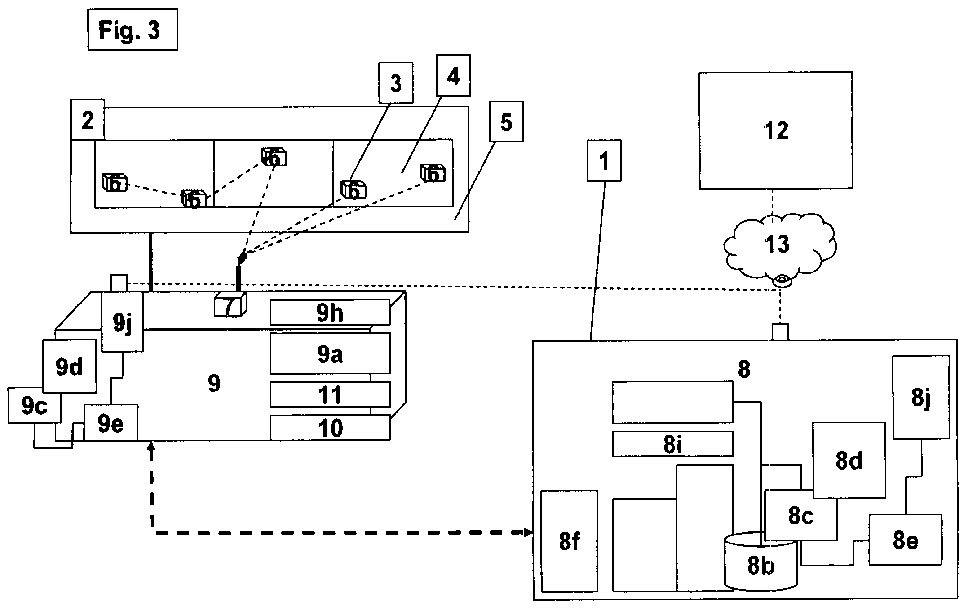

Fig. 3 zeigt, dass zwischen der Steuerungseinrichtung 9 und dem Rechner 8 eine temporäre Verbindung besteht, die kabelgebunden oder kabellos sein kann. Sie kann an einer Schnittstelle 8f durch WLAN, Bluetooth oder Ethernet hergestellt werden. Die Verbindung dient der Konfigurierung der Vorrichtung 2, insbesondere der Einstellung der zu erfassenden Daten. Es wird des Weiteren konfiguriert, in welcher Weise erfasst und gemessen werden soll. Die Erfassung der Daten kann zeitgebunden oder ereignisgebunden gestartet werden.

In der Steuerungseinrichtung 9 sind ein vorrichtungsinterner Datenerfassungsblock 9a, eine vorrichtungsinterne Diagnoseeinrichtung 9c, ein vorrichtungsinternes Vergleichsmodul 9d, ein vorrichtungsinternes Berichtsmodul 9e, ein vorrichtungsinternes Synchronisierungsmodul 9h und ein vorrichtungsinternes Versendungsmodul 9j integriert.

Die Anordnung gemäß Fig. 3 ist ähnlich aufgebaut, wie die Anordnung gemäß Fig. 2. Hier dient der mobile Rechner 8 jedoch nur dem Konfigurieren und Verifizieren der Daten durch den Servicetechniker.

Der mobile Rechner, der in den Fig. 1 bis 3 verwendet wurde, kann auch verwendet werden, um mit einer Vielzahl von Vorrichtungen 2 gemäß den Fig. 1 bis 3 zu kommunizieren.

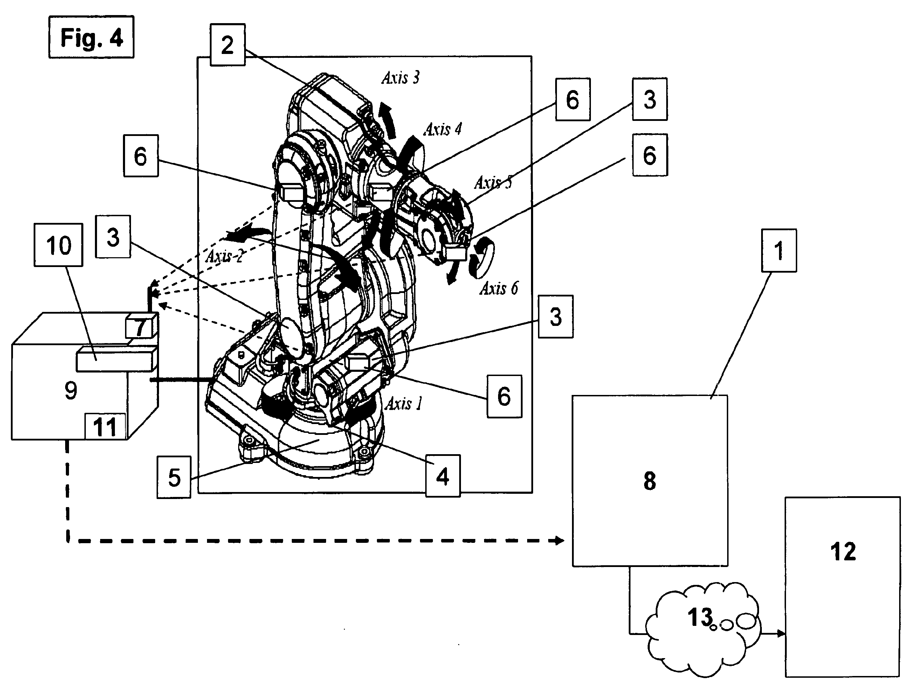

Fig. 4 zeigt eine Anordnung, umfassend eine Datenverarbeitungsanlage 1 und mindestens eine Vorrichtung 2, welche bewegliche Teile 3 aufweist, wobei die beweglichen Teile 3 an Anbindungsstellen 4 eines feststehenden Grundkörpers 5 oder an weiteren beweglichen Teilen 3 angelenkt sind. Ganz konkret ist die Vorrichtung 2 als Industrieroboter ausgestaltet. Die beweglichen Teile 3 sind als Arme oder Manipulatoren des Industrieroboters ausgestaltet. Bei dem Industrieroboter handelt es sich um einen Knickarmroboter. Mehrere drahtlos datenübertragende Sensoreinrichtungen 6 sind drahtlos an Anbindungsstellen 4 oder an beweglichen Teilen 3 selbst festgelegt und kommunizieren mit der Datenverarbeitungsanlage 1.

Mehrere Sensoreinrichtungen 6 sind an den beweglichen Teilen 3 festgelegt und erfassen physikalische Daten der beweglichen Teile 3. Die Sensoreinrichtungen 6 sind an markierten, für die Sensoreinrichtungen 6 vorgesehenen Positionen angeordnet. Die Sensoreinrichtungen 6 erfassen Daten mit einer voreingestellten Abfragerate.

Die Datenverarbeitungsanlage 1 weist eine Brückeneinheit 7 auf, an welche die Sensoreinrichtungen 6 erfasste Daten übermitteln. Die Übermittlung der Daten erfolgt per Funk.

Die Datenverarbeitungsanlage 1 weist einen Rechner 8 auf, der die von den Sensoreinrichtungen übermittelten Daten ausliest. Die Brückeneinheit 7 ist in der Steuerungseinrichtung 9 der Vorrichtung 2 integriert. Die Steuerungseinrichtung 9 weist einen vorrichtungsinternen Speicher 10 auf und eine Software 11 zur Speicherung der von der Brückeneinheit 7 erhaltenen und weiterer Daten. Der Rechner 8 liest auch diese weiteren Daten aus der Steuerungseinrichtung 9 der Vorrichtung aus und kann diese konfigurieren. Die Verbindung zwischen dem Rechner 8 und der Steuerungseinrichtung 9 erfolgt über ein Kabel oder über eine Schnittstelle. Denkbar ist auch eine Verbindung über Funk, Bluetooth oder WLAN.

Der Rechner 8 enthält eine Software, welche die von den Sensoreinrichtungen 6 empfangenen Daten analysiert und Diagnoseergebnisse ausgibt. Der Rechner 8 ist als mobiler Rechner ausgestaltet. Die Datenverarbeitungsanlage 1 umfasst einen zentralen, externen Speicher 12, an welchen der Rechner 8 die von den Sensoreinrichtungen 6 erfassten Daten und/ oder weitere Daten aus der Steuerungseinrichtung 9 über das Internet 13 überträgt. Dies kann durch eine LAN-, WLAN- oder WWLAN-Verbindung realisiert werden.

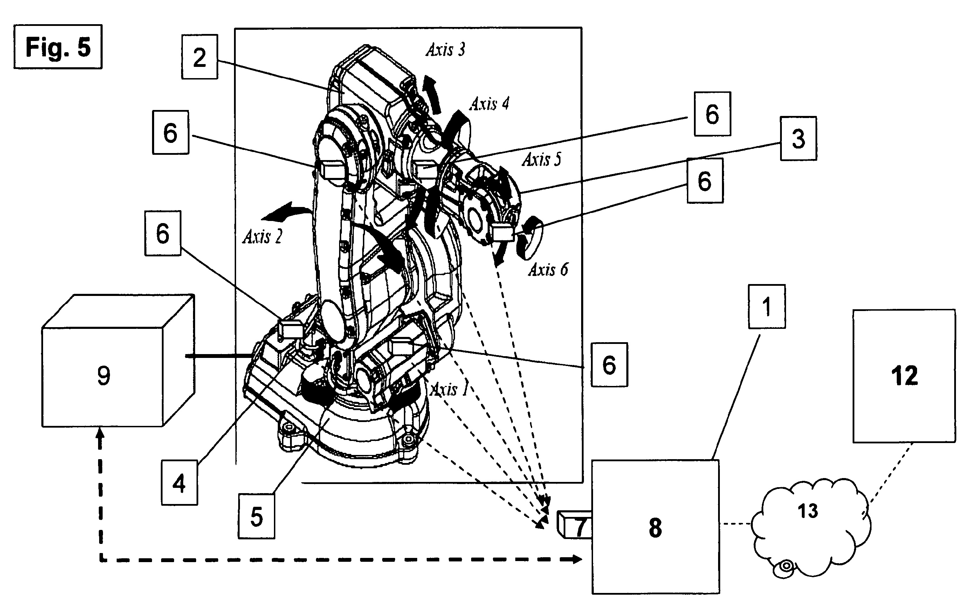

Fig. 5 zeigt eine Vorrichtung 2, an welcher mehrere Sensoreinrichtungen 6 angeordnet sind. Hier ist die Brückeneinheit 7 direkt dem mobilen Rechner 8 zugeordnet. Die Sensoreinrichtungen 6 übertragen die erfassten Daten per Funk an die Brückeneinheit 7. Der Rechner 8 enthält eine Software, welche die von den Sensoreinrichtungen 6 empfangenen Daten analysiert und Diagnoseergebnisse ausgibt. Der Rechner 8 ist als mobiler Rechner ausgestaltet. Der Rechner 8 übermittelt die von den Sensoreinrichtungen 6 erfassten Daten über das Internet 13 an den zentralen, externen Speicher 12. Der Rechner 8 liest auch weitere Daten aus der Steuerungseinrichtung 9 der Vorrichtung 2 aus und analysiert und versendet diese optional. Die Verbindung zwischen dem Rechner 8 und der Steuerungseinrichtung 9 erfolgt über ein Kabel oder über eine Schnittstelle. Denkbar ist auch eine Verbindung über Funk, Bluetooth oder WLAN.

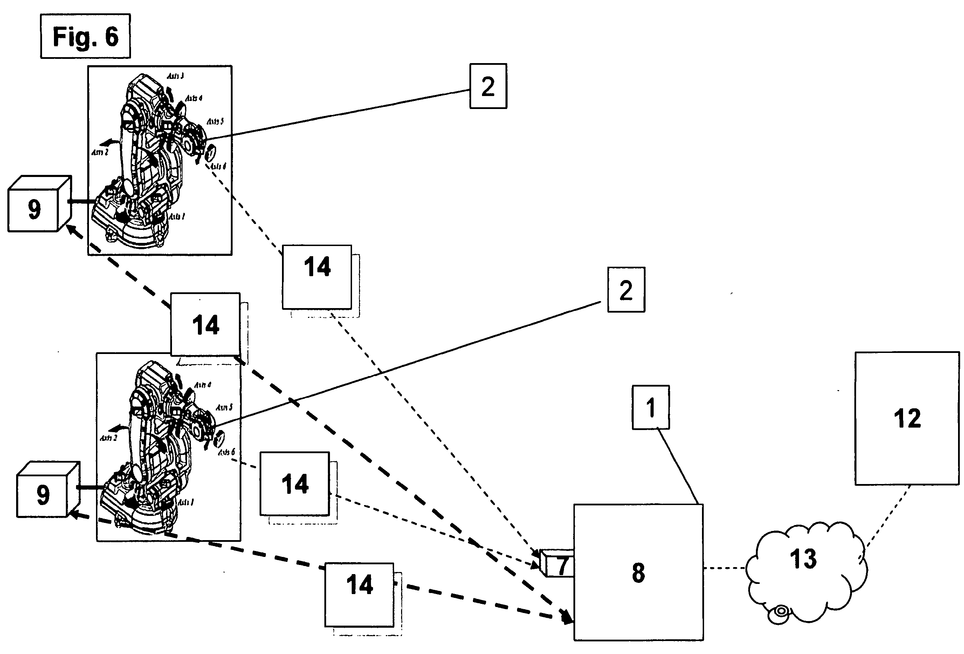

Fig. 6 zeigt einen Rechner 8, der Daten mehrerer Steuerungseinrichtungen 9 verschiedener Vorrichtungen 2 ausliest und Daten von mehreren Sensoreinrichtungen 6 der verschiedenen Vorrichtungen 2 erfasst. Hier ist die Brückeneinheit 7 dem Rechner 8 direkt zugeordnet. Die Daten werden von den Sensoreinrichtungen 6 per Funk an die Brückeneinheit 7 übertragen. Die Verbindung zwischen dem Rechner 8 und den Steuerungseinrichtungen 9 erfolgt ebenfalls über Funk. Denkbar ist auch eine Verbindung über Kabel, über Schnittstellen, Bluetooth oder WLAN. Die Übertragung der Daten der Steuerungseinrichtungen 9 und der Daten der Sensoreinrichtungen 6 zum Rechner 8 erfolgt unterstützt durch Funkwiederholeinrichtungen 14. Die Daten mehrerer Vorrichtungen 2 werden durch die Software auf dem Rechner 8 gesammelt, aufbereitet und lokal auf dem Rechner gespeichert und/oder zu einem zentralen, externen Speicher 12 versandt. Des Weiteren werden die Daten mehrerer Vorrichtungen 2 durch die Software auf dem Rechner 8 analysiert. Die Software kann die Daten auch untereinander, mit historischen Daten oder mit einem Referenzsystem vergleichen.

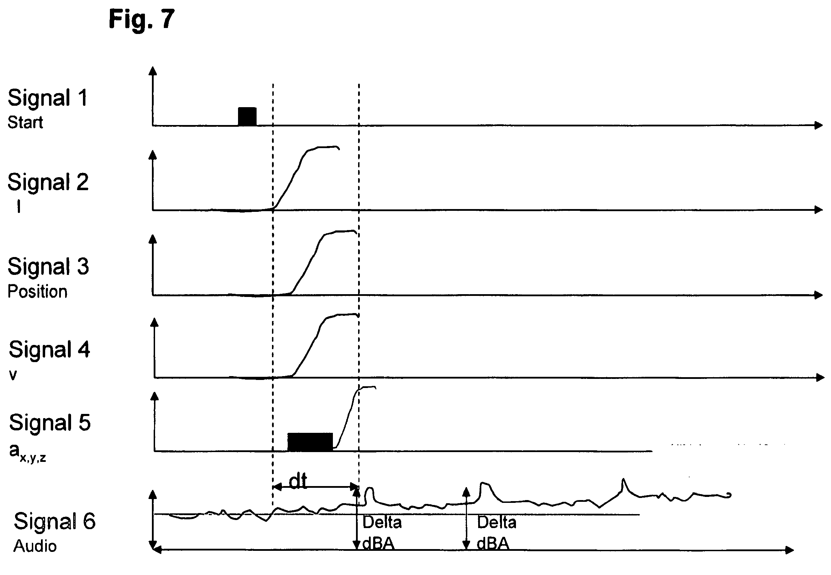

Fig. 7 zeigt schematisch die von einer Sensoreinrichtung 6 übermittelten Daten anhand von Signalen. Signal 1 repräsentiert einen Startbefehl für eine Bewegungssequenz, der automatisch oder manuell gegeben werden kann. Signal 2 repräsentiert einen von einem Sensor gemessenen Strom I, Signal 3 eine örtliche Position, Signal 4 eine Geschwindigkeit v und Signal 5 die Beschleunigung a eines beweglichen Teils 3. Die Werte der Beschleunigung a geben Informationen über den Start und das Ende der Bewegungssequenz. Signal 6 repräsentiert erfasste Audiosignale an der Anbindungsstelle 4 oder an dem beweglichen Teil 3, an welchem die Sensoreinrichtung 6 angebracht ist. Des Weiteren kann als Signal das Ende einer Bewegungssequenz gemessen und übermittelt werden. Der Befehl, eine Messung zu beenden, kann automatisch oder manuell gegeben werden. Die Zeitintervalle dt können Aufschluss über das Spiel im Getriebe eines Industrieroboters geben. Das Signal 6 gibt zusammen mit den Signalen 1 bis 5 zusätzliche Informationen für eine Diagnose der Vorrichtung 2. Das Signal 6 kann charakteristisch für Bewegungsumkehrungen, Getriebespiel, Lagerdefekte oder Laufgeräusche bei der Rotation um eine Achse sein. Die Geräuschspitzen, die durch "Delta dBA" gekennzeichnet sind, können auf die vorgenannten Effekte hinweisen.

Die Bewegungssequenzen einzelner beweglicher Teile 3 werden während laufender Arbeitsprozesse der Vorrichtung 2 gemessen und bewertet. Alternativ kann eine Testbewegungssequenz gefahren werden, die Diagnosezwecken dient. Hierdurch können bestimmte Situationen besser erkannt und analysiert werden. Bei einer Testbewegungssequenz kann es sich um das Anfahren von Koordinaten durch einen Manipulator der Vorrichtung 2 handeln, wobei der Manipulator bei hoher Masse mit hoher Geschwindigkeit verfahren und auf kurzer Strecke abgebremst wird.

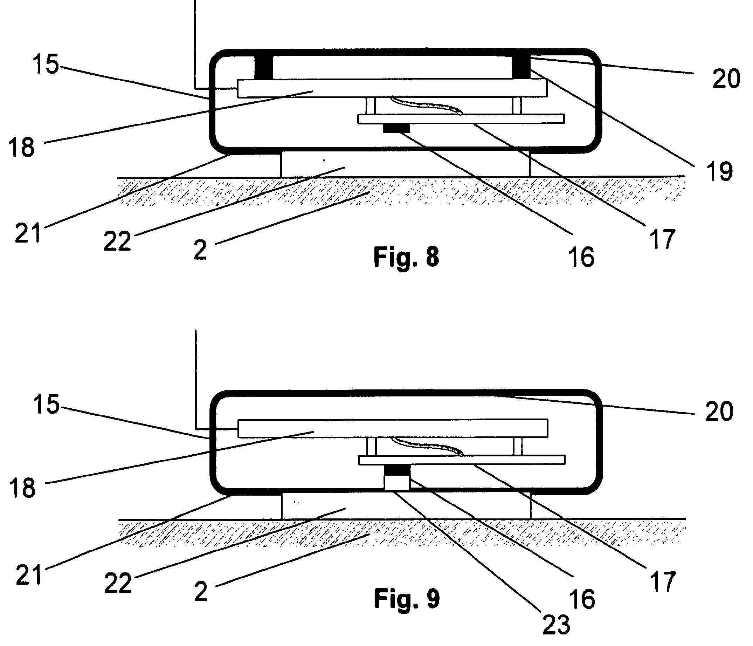

Fig. 8 zeigt eine Sensoreinrichtung 6, die ein Gehäuse 15 aufweist, in welchem ein Sensor 16 aufgenommen ist. Konkret ist ein erster Akustiksensor 16 aufgenommen, welcher Geräusche oder Vibrationen eines beweglichen Teils 3 erfassen kann. Der erste Akustiksensor 16 ist an einer Sensorplatine 17 angebracht, die mit einer parallel darüber angeordneten Prozessplatine 18 verdrahtet ist. Die Prozessplatine 18 ist durch Befestigungsmittel 19 an der Oberseite 20 des Gehäuses 15 festgelegt. Die Sensorplatine 17 und die Prozessplatine 18 sind elektrisch und mechanisch miteinander verbunden.
An der Unterseite 21 des Gehäuses ist ein Permanentmagnet 22 angebracht. Der Permanentmagnet 22 kann an der metallischen Vorrichtung 2 bzw. an deren beweglichen Teilen 3 festgelegt werden.

Fig. 9 zeigt eine Sensoreinrichtung 6, bei welcher der erste Akustiksensor 16 durch einen Körperschallübertragungskörper 23 an der Unterseite 21 des Gehäuses 15 festgelegt ist. Die Sensorplatine 17 und die Prozessplatine 18 sind übereinander angeordnet und werden durch den Körperschallübertragungskörper 23 und den ersten Akustiksensor 16 am Gehäuse 15 festgelegt. Die Sensorplatine 17 und die Prozessplatine 18 sind elektrisch und mechanisch verbunden.

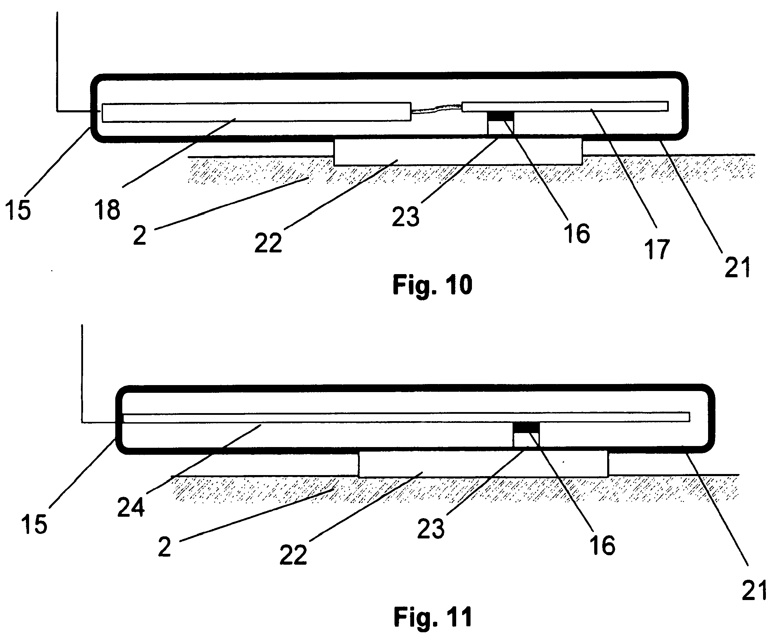

Fig. 10 zeigt eine Sensoreinrichtung 6, bei welcher die Sensorplatine 17 im Wesentlichen längsfluchtend zur Prozessplatine 18 angeordnet ist. Die Sensorplatine 17 und die Prozessplatine 18 sind elektrisch verbunden, aber mechanisch entkoppelt. Die Sensorplatine 17 wird durch den Körperschallübertragungskörper 23 und den ersten Akustiksensor 16 am Gehäuse 15 festgelegt.

Fig. 11 zeigt eine Sensoreinrichtung 6, in dessen Gehäuse 15 nur eine Platine 24 aufgenommen ist. Die Prozessplatine 18 und die Sensorplatine 17 sind hier einstückig ausgebildet. Die Platine 24 wird durch den Körperschallübertragungskörper 23 und den ersten Akustiksensor 16 am Gehäuse 15 festgelegt.

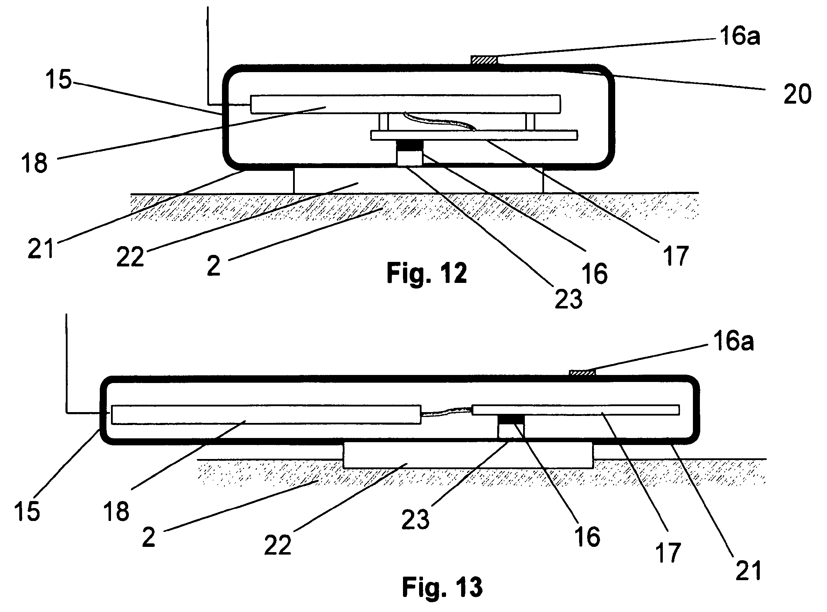

Fig. 12 zeigt eine Sensoreinrichtung 6, bei welcher der erste Akustiksensor 16 durch einen Körperschallübertragungskörper 23 an der Unterseite 21 des Gehäuses 15 festgelegt ist. Die Sensorplatine 17 und die Prozessplatine 18 sind übereinander angeordnet und werden durch den Körperschallübertragungskörper 23 und den ersten Akustiksensor 16 am Gehäuse 15 festgelegt. Dabei ist im Gehäuse 15 der erste Akustiksensor 16 zur Erfassung von Geräuschen des beweglichen Teils 3 und außerhalb am Gehäuse 15 ein zweiter Akustiksensor 16a zur Erfassung von Umgebungsgeräuschen aufgenommen.

Fig. 13 zeigt eine Sensoreinrichtung 6, bei welcher die Sensorplatine 17 im Wesentlichen längsfluchtend zur Prozessplatine 18 angeordnet ist. Die Sensorplatine 17 und die Prozessplatine 18 sind elektrisch verbunden, aber mechanisch entkoppelt. Die Sensorplatine 17 wird durch den Körperschallübertragungskörper 23 und den ersten Akustiksensor 16 am Gehäuse 15 festgelegt. Dabei ist im Gehäuse 15 der erste Akustiksensor 16 zur Erfassung von Geräuschen des beweglichen Teils 3 und außerhalb am Gehäuse 15 der zweite Akustiksensor 16a zur Erfassung von Umgebungsgeräuschen aufgenommen.

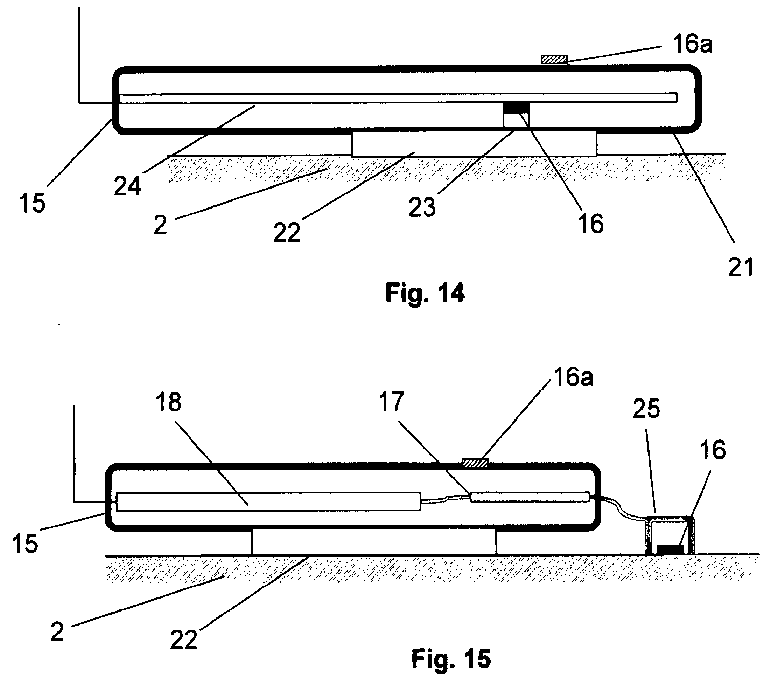

Fig. 14 zeigt eine Sensoreinrichtung 6, in deren Gehäuse 15 nur eine Platine 24 aufgenommen ist. Die Prozessplatine 18 und die Sensorplatine 17 sind hier einstückig ausgebildet. Die Platine 24 wird durch den Körperschallübertragungskörper 23 und den ersten Akustiksensor 16 am Gehäuse 15 festgelegt. Dabei ist im Gehäuse 15 der erste Akustiksensor 16 zur Erfassung von Geräuschen des beweglichen Teils 3 und außerhalb am Gehäuse 15 der zweite Akustiksensor 16a zur Erfassung von Umgebungsgeräuschen aufgenommen.

Fig. 15 zeigt eine Sensoreinrichtung 6, bei welcher die Sensorplatine 17 im Wesentlichen längsfluchtend zur Prozessplatine 18 angeordnet ist. Die Sensorplatine 17 und die Prozessplatine 18 sind elektrisch verbunden, aber mechanisch entkoppelt. Dabei ist in einer externen Kammer 25 der erste Akustiksensor 16 zur Erfassung von Geräuschen des beweglichen Teils 3 und außerhalb am Gehäuse 15 der zweite Akustiksensor 16a zur Erfassung von Umgebungsgeräuschen aufgenommen. Bei Verwendung mehrerer Akustiksensoren 16, 16a können komplexe Geräuschanalysen durchgeführt werden.

Die hier beschriebenen Sensoreinrichtungen 6 weisen einen eigenen Datenspeicher auf. Die Sensoreinrichtungen 6 weisen des Weiteren eine eigene Stromversorgung auf. Die Sensoreinrichtungen 6 sind magnetisch an der Vorrichtung 2 festgelegt.

Hinsichtlich weiterer vorteilhafter Ausgestaltungen und Weiterbildungen der erfindungsgemäßen Lehre wird einerseits auf den allgemeinen Teil der Beschreibung und andererseits auf die Patentansprüche verwiesen.

### Bezugszeichenliste

- 1: Datenverarbeitungsanlage
- 2: Vorrichtung mit beweglichen Teilen
- 3: bewegliches Teil
- 4: Anbindungsstelle
- 5: Grundkörper
- 6: Sensoreinrichtung
- 7: Brückeneinheit
- 8: Rechner
- 8a: Datenerfassungsblock
- 8b: Datenspeicher
- 8c: Diagnoseeinrichtung
- 8d: Vergleichsmodul
- 8e: Berichtsmodul
- 8f: Schnittstelle
- 8g: Trigger
- 8h: Synchronisierungsmodul
- 8i: Nachrichtsmodul
- 8j: Versendungsmodul
- 9: Steuerungseinrichtung
- 9a: vorrichtungsinterner Datenerfassungsblock
- 9c: vorrichtungsinterne Diagnoseeinrichtung
- 9d: vorrichtungsinternes Vergleichsmodul
- 9e: vorrichtungsinternes Berichtsmodul
- 9h: vorrichtungsinternes Synchronisierungsmodul
- 9j: vorrichtungsinternes Versendungsmodul
- 10: vorrichtungsinterner Speicher
- 11: vorrichtungsinterne Software
- 12: zentraler, externer Speicher
- 13: Internet
- 14: Funkwiederholeinrichtung
- 15: Gehäuse
- 16: erster Akustiksensor
- 16a: zweiter Akustiksensor
- 17: Sensorplatine
- 18: Prozessplatine
- 19: Befestigungsmittel
- 20: Oberseite des Gehäuses
- 21: Unterseite des Gehäuses
- 22: Permanentmagnet
- 23: Körperschallübertragungskörper
- 24: Platine
- 25: externe Kammer

## Patentansprüche

1. Anordnung zur Diagnose einer Vorrichtung (2) mit beweglichen Teilen, umfassend eine Datenverarbeitungsanlage (1) mit einem Rechner (8) und mindestens eine Vorrichtung (2), insbesondere ein Industrieroboter, mit einer Steuerungseinrichtung (9), wobei die Vorrichtung (2) bewegliche Teile (3) aufweist, welche an Anbindungsstellen (4) eines feststehenden Grundkörpers (5) oder an weiteren beweglichen Teilen (3) angelenkt sind, wobei mindestens eine Sensoreinrichtung (6) vorgesehen ist, welche drahtlos datenübertragend an der jeweiligen Anbindungsstelle (4) oder an dem jeweiligen beweglichen Teil (3) selbst festgelegt ist, physikalische Daten des jeweiligen beweglichen Teils (3) erfasst und die Daten drahtlos an den Rechner (8) übermittelt, wobei mittels der mindestens einen Sensoreinrichtung (6) Beschleunigungen und/oder Temperaturen und/oder Licht und/oder Drehmomente und/oder Geräusche und/oder chemische Substanzen in der Umgebung und/oder auch Spannungen und/oder Ströme erfassbar sind, **dadurch gekennzeichnet, dass** zwischen der Steuerungseinrichtung (9) und dem Rechner (8) eine temporäre Verbindung zur Steuerung der Bewegungssequenzen der Vorrichtung (2) und zum gleichzeitigen Auslesen der Daten aus der Steuerungseinrichtung (9) sowie zum Erfassen der Steuerungseinrichtungszeit aus der Steuerungseinrichtung (9) besteht und eine Zeitsynchronisation zwischen Rechner (8) und Steuerungseinrichtung (9) durchgeführt wird und die Anordnung ein Synchronisierungsmodul (8h,9h), welches eine Synchronisierung der Steuerungseinrichtungszeit und Sensoreinrichtungszeit bewirkt, und eine Diagnoseeinrichtung (8c) zur Analyse der erfassten Daten, welche zur Analyse der erfassten Daten eingesetzte Zeitintervalle und Zeitdifferenzen berechnet und mit typischen Modelldaten vergleicht, vorsieht.

2. Anordnung nach Anspruch 1, **dadurch gekennzeichnet, dass** die Sensoreinrichtung (6) Daten mit einer voreingestellten Abfragerate erfasst.

3. Anordnung nach einem der Ansprüche 1 oder 2, **dadurch gekennzeichnet, dass** die Datenverarbeitungsanlage (1) eine Brückeneinheit (7) aufweist, an die mindestens eine Sensoreinrichtung (6) erfasste Daten übermittelt.

4. Anordnung nach Anspruch 3, **dadurch gekennzeichnet, dass** die Brückeneinheit (7) an der Steuerungseinrichtung (9) der Vorrichtung (2) angebracht oder in diese integriert ist.

5. Anordnung nach Anspruch 3, **dadurch gekennzeichnet, dass** die Brückeneinheit (7) an dem Rechner (8) angebracht oder in diesen integriert ist.

6. Anordnung nach einem der Ansprüche 1 bis 5, **dadurch gekennzeichnet, dass** der Rechner (8) von der Sensoreinrichtung (6) erfasste Daten ausliest und/ oder die Sensoreinrichtung (6) konfiguriert.

7. Anordnung nach einem der Ansprüche 1 bis 6, **dadurch gekennzeichnet, dass** der Rechner (8) Daten aus der Steuerungseinrichtung (9) ausliest und/ oder die Steuerungseinrichtung (9) konfiguriert.

8. Anordnung nach einem der Ansprüche 1 bis 7, **dadurch gekennzeichnet, dass** der Rechner (8) eine Software enthält, welche die von der Sensoreinrichtung (6) empfangenen Daten und/ oder Daten aus der Steuerungseinrichtung (9) analysiert und Diagnoseergebnisse der Daten ausgibt.

9. Anordnung nach einem der Ansprüche 1 bis 8, **dadurch gekennzeichnet, dass** der Rechner (8) Daten von mehreren Sensoreinrichtungen (6) verschiedener Vorrichtungen (2) erfasst und/ oder Daten mehrerer Steuerungseinrichtungen (9) verschiedener Vorrichtungen (2) ausliest.

10. Anordnung nach einem der Ansprüche 1 bis 9, **dadurch gekennzeichnet, dass** der Rechner (8) mehrere Sensoreinrichtungen (6) verschiedener Vorrichtungen (2) konfiguriert und/ oder mehrere Steuerungseinrichtungen (9) verschiedener Vorrichtungen (2) konfiguriert.

11. Anordnung nach einem der Ansprüche 1 bis 10, **dadurch gekennzeichnet, dass** die Datenverarbeitungsanlage (1) einen zentralen, externen Speicher (12) aufweist, an welchen der Rechner (8) die von der Sensoreinrichtung (6) erfassten Daten und/ oder Daten der Steuerungseinrichtung (9) über das Internet (13) überträgt.

12. Anordnung nach einem der Ansprüche 1 bis 11, **dadurch gekennzeichnet, dass** die Übertragung der Daten der Steuerungseinrichtung (9) und/ oder der Sensoreinrichtung (6) durch eine Funkwiederholeinrichtung (14) erfolgt.

13. Anordnung nach einem der Ansprüche 1 bis 12, **dadurch gekennzeichnet, dass** die Sensoreinrichtung (6) ein Gehäuse (15) aufweist, in und/oder an welchem ein oder mehrere Sensoren (16, 16a) aufgenommen sind.

14. Anordnung nach Anspruch 13, **dadurch gekennzeichnet, dass** im oder am Gehäuse (15) mindestens ein Akustiksensor (16, 16a) zur Erfassung von Geräuschen aufgenommen ist.

15. Anordnung nach Anspruch 13 oder 14, **dadurch gekennzeichnet, dass** im Gehäuse (15) ein erster Akustiksensor (16) zur Erfassung von Geräuschen des beweglichen Teils (3) und am Gehäuse (15) ein zweiter Akustiksensor (16a) zur Erfassung von Umgebungsgeräuschen aufgenommen ist.

16. Anordnung nach einem der Ansprüche 13 bis 15, **dadurch gekennzeichnet, dass** im Gehäuse (15) mindestens eine Prozessplatine (18) aufgenommen ist.

17. Anordnung nach einem der Ansprüche 1 bis 16, **dadurch gekennzeichnet, dass** die Sensoreinrichtung (6) einen eigenen Datenspeicher aufweist.

18. Anordnung nach einem der Ansprüche 1 bis 17, **dadurch gekennzeichnet, dass** die Sensoreinrichtung (6) eine eigene Stromversorgung aufweist.

## Claims

1. Arrangement for diagnosing an apparatus (2) having moving parts, comprising a data processing installation (1) having a computer (8) and comprising at least one apparatus (2), in particular an industrial robot, having a control device (9), wherein the apparatus (2) has moving parts (3) which are articulated to connection points (4) on a fixed basic body (5) or to further moving parts (3), wherein at least one sensor device (6) is provided which is wirelessly secured, in a data-transmitting manner, in position on the respective connection point (4) or on the respective moving part (3) itself, captures physical data from the respective moving part (3) and transmits the data wirelessly to the computer (8), wherein the at least one sensor device (6) can be used to detect accelerations and/or temperatures and/or light and/or torques and/or sounds and/or chemical substances in the surroundings and/or also voltages and/or currents, **characterized in that** there is, between the control device (9) and the computer (8), a temporary connection for controlling the motion sequences of the apparatus (2) and for simultaneously reading the data from the control device (9) and also for detecting the control device time from the control device (9), and time synchronization is performed between computer (8) and control device (9), and the arrangement provides a synchronization module (8h, 9h), which prompts synchronization of the control device time and sensor device time, and a diagnosis device (8C) for analyzing the captured data, which diagnosis device computes time intervals and time differences used for analysing the captured data and compares them with typical model data.

2. Arrangement according to Claim 1, **characterized in that** the sensor device (6) captures data at a preset challenge rate.

3. Arrangement according to one of Claims 1 and 2, **characterized in that** the data processing installation (1) has a bridge unit (7) to which at least one sensor device (6) transmits captured data.

4. Arrangement according to Claim 3, **characterized in that** the bridge unit (7) is fitted to or integrated in the control device (9) of the apparatus (2).

5. Arrangement according to Claim 3, **characterized in that** the bridge unit (7) is fitted to or integrated in the computer (8).

6. Arrangement according to one of Claims 1 to 5, **characterized in that** the computer (8) reads data captured by the sensor device (6) and/or configures the sensor device (6).

7. Arrangement according to one of Claims 1 to 6, **characterized in that** the computer (8) reads data from the control device (9) and/or configures the control device (9).

8. Arrangement according to one of Claims 1 to 7, **characterized in that** the computer (8) contains a piece of software which analyses the data received from the sensor device (6) and/or data from the control device (9) and outputs diagnosis results from the data.

9. Arrangement according to one of Claims 1 to 8, **characterized in that** the computer (8) captures data from a plurality of sensor devices (6) in different apparatuses (2) and/or reads data from a plurality of control devices (9) in different apparatuses (2).

10. Arrangement according to one of Claims 1 to 9, **characterized in that** the computer (8) configures a plurality of sensor devices (6) in different apparatuses (2) and/or configures a plurality of control devices (9) in different apparatuses (2).

11. Arrangement according to one of Claims 1 to 10, **characterized in that** the data processing installation (1) has a central, external memory (12) to which the computer (8) transmits the data captured by the sensor device (6) and/or data from the control device (9) via the Internet (13).

12. Arrangement according to one of Claims 1 to 11, **characterized in that** the data from the control device (9) and/or from the sensor device (6) are transmitted by a radio repeater (14).

13. Arrangement according to one of Claims 1 to 12, **characterized in that** the sensor device (6) has a housing (15) in and/or on which one or more sensors (16, 16a) are held.

14. Arrangement according to Claim 13, **characterized in that** at least one acoustic sensor (16, 16a) for capturing noise is held in or on the housing (15).

15. Arrangement according to Claim 13 or 14, **characterized in that** a first acoustic sensor (16) for capturing noise from the moving part (3) is held in the housing (15) and a second acoustic sensor (16a) for capturing ambient noise is held on the housing (15).

16. Arrangement according to one of Claims 13 to 15, **characterized in that** at least one process board (18) is held in the housing (15).

17. Arrangement according to one of Claims 1 to 16, **characterized in that** the sensor device (6) has a dedicated data memory.

18. Arrangement according to one of Claims 1 to 17, **characterized in that** the sensor device (6) has a dedicated power supply.

## Revendications

1. Système de diagnostic d'un dispositif (2) comportant des parties mobiles, comprenant une installation de traitement de données (1) comportant un calculateur (8) et au moins un dispositif (2), notamment un robot industriel, comportant un moyen de commande (9), dans lequel le dispositif (2) présente des parties mobiles (3) qui s'articulent sur des points de liaison (4) d'un corps de base stationnaire (5) ou sur d'autres parties mobiles (3), dans lequel il est prévu au moins un moyen détecteur (6) qui est lui-même fixé de manière à transmettre sans fil des données au point de liaison (4) respectif ou à la partie mobile (3) respective, qui détecte des données physiques de la partie mobile respective (3) et qui transmet sans fil les données au calculateur (8), dans lequel des accélérations et/ou des températures et/ou une lumière et/ou des couples de rotation et/ou des bruits et/ou des substances chimiques présentes dans l'environnement et/ou également des tensions et/ou des courants peuvent être détectés au moyen de l'au moins un moyen détecteur (6), **caractérisé en ce qu'**une liaison temporaire entre le moyen de commande (9) et le calculateur (8), destinée à commander les séquences de mouvement du dispositif (2) et à lire simultanément les données à partir du moyen de commande (9) ainsi qu'à détecter le temps du moyen de commande est constituée du moyen de commande (9) et **en ce qu'**une synchronisation temporelle entre le calculateur (8) et le moyen de commande (9) est effectuée et **en ce que** le système comporte un module de synchronisation (8h, 9h), qui produit une synchronisation du temps du moyen de commande et du temps du moyen détecteur, et un moyen de diagnostic (8c) destiné à analyser les données détectées, qui calcule des intervalles de temps et des différences de temps pour analyser les données détectées et qui les compare à des données de modèles typiques.

2. Système selon la revendication 1, **caractérisé en ce que** le moyen détecteur (6) détecte des données à une fréquence d'échantillonnage préréglée.

3. Système selon l'une quelconque des revendications 1 ou 2, **caractérisé en ce que** l'installation de traitement de données (1) présente une unité de pontage (7) à laquelle au moins un moyen détecteur (6) transmet des données détectées.

4. Système selon la revendication 3, **caractérisé en ce que** l'unité de pontage (7) est montée sur le moyen de commande (9) du dispositif (2) ou y est intégrée.

5. Système selon la revendication 3, **caractérisé en ce que** l'unité de pontage (7) est montée sur le calculateur (8) ou y est intégré.

6. Système selon l'une quelconque des revendications 1 à 5, **caractérisé en ce que** le calculateur (8) lit des données détectées par le moyen détecteur (6) et/ou configure le moyen détecteur (6).

7. Système selon l'une quelconque des revendications 1 à 6, **caractérisé en ce que** le calculateur (8) lit des données à partir du moyen de commande (9) et/ou configure le moyen de commande (9).

8. Système selon l'une quelconque des revendications 1 à 7, **caractérisé en ce que** le calculateur (8) contient un logiciel qui analyse les données reçues par le moyen détecteur (6) et/ou des données provenant du moyen de commande (9) et délivrée des résultats de diagnostic des données.

9. Système selon l'une quelconque des revendications 1 à 8, **caractérisé en ce que** le calculateur (8) détecte des données provenant de plusieurs moyens détecteurs (6) de différents dispositifs (2) et/ou lit des données de plusieurs moyens de commande (9) de différents dispositifs (2).

10. Système selon l'une quelconque des revendications 1 à 9, **caractérisé en ce que** le calculateur (8) configure plusieurs moyens détecteurs (6) de différents dispositifs (2) et/ou plusieurs moyens de commande (9) de différents dispositifs (2).

11. Système selon l'une quelconque des revendications 1 à 10, **caractérisé en ce que** l'installation de traitement de données (1) présente une mémoire centrale externe (12) à laquelle le calculateur (8) transmet par l'intermédiaire de l'internet (13) des données détectées par le moyen détecteur (6) et/ou des données du moyen de commande (9).

12. Système selon l'une quelconque des revendications 1 à 11, **caractérisé en ce que** la transmission des données du moyen de commande (9) et/ou du moyen détecteur (6) s'effectue par l'intermédiaire d'un moyen répétiteur radio (14).

13. Système selon l'une quelconque des revendications 1 à 12, **caractérisé en ce que** le moyen détecteur (6) présente un boîtier (15) dans et/ou sur lequel sont montés un ou plusieurs capteurs (16, 16a).

14. Système selon la revendication 13, **caractérisé en ce qu'**au moins un capteur acoustique (16, 16a) est monté dans ou sur le boîtier (15) pour détecter des bruits.

15. Système selon l'une quelconque des revendications 13 à 14, **caractérisé en ce qu'**un premier capteur acoustique (16) destiné à détecter des bruits de la partie mobile (3) est monté dans le boîtier (15) et **en ce qu'**un second capteur acoustique (16a) destiné à détecter des bruits de l'environnement est monté sur le boîtier (15).

16. Système selon l'une quelconque des revendications 13 à 15, **caractérisé en ce qu'**au moins une carte de circuit de traitement (18) est montée dans le boîtier (15).

17. Système selon l'une quelconque des revendications 1 à 16, **caractérisé en ce que** le moyen détecteur (6) présente sa propre mémoire de données.

18. Système selon l'une quelconque des revendications 1 à 17, **caractérisé en ce que** le moyen détecteur (6) présente sa propre alimentation en courant.
